# FASCICULE DE BREVET EUROPEEN

(11) **EP 1 044 904 B1**
(45) Date de publication et mention de la délivrance du brevet: **22.10.2003**
(21) Numéro de dépôt: 99403257.1
(22) Date de dépôt: 23.12.1999
(51) Int. Cl.: B65G 53/14

(54) **Procédé et dispositif de remplissage automatique d'un bac chauffant avec un produit solide**
Verfahren und Vorrichtung zum automatischen Abfüllen eines festen Produkts in einen heissen Behälter
Process and device for automatically filling a hot container with a solid product

(30) Priorité: 29.12.1998 FR 9816781
(43) Date de publication de la demande: 18.10.2000
(60) Demande divisionnaire: 03290535.8
(73) Titulaire: NORDSON CORPORATION, Westlake, OH 44145 (US)
(72) Inventeur: Boudin, Jean-Pierre, 45560 Saint Denis en Val (FR)
(74) Mandataire: Debay, Yves

(56) Documents cités:
- EP-A- 0 164 436
- EP-A- 0 562 219
- US-A- 4 441 450

## Description

La présente invention concerne un dispositif de remplissage d'un bac chauffant avec un produit solide.

La présente invention concerne plus particulièrement un procédé et un dispositif de remplissage d'un bac à colle d'une machine à déposer de la colle "Hot Melt".

Il est connu des machines permettant de déposer de la colle à haute température de fusion, appelé communément colle 'Hot Melt'. Ces machines comportent un bac à colle qui est chauffé entre 120 et 200°C afin de maintenir la colle en phase liquide. Les bacs à colle 'Hot Melt' possèdent généralement un couvercle commandé manuellement. La mise à niveau ou le remplissage de ces bacs nécessite d'ouvrir manuellement le couvercle puis de déposer une dose de colle sous forme de pains ou de granulés. La température intérieure du bac étant très importante, cette opération s'avère très dangereuse et doit être répétée fréquemment dans le cas d'une utilisation intensive du générateur de colle.

Des dispositifs d'approvisionnement automatiques existent sous forme de tiroir ou de volets commandés par des vérins ou des artifices mécaniques voir p. e. le document US-A-4 441 450. Ces dispositifs possèdent de nombreux inconvénients en raison de la proximité du bac. En effet, des particules de colle ou de la vapeur de colle s'intègrent rapidement dans les mécanismes du dispositif d'approvisionnement et bloquent ceux-ci. Tout dysfonctionnement nécessite une intervention humaine dans des conditions dangereuses et difficiles. De plus, lorsque le générateur de colle n'est pas utilisé, le refroidissement de la colle interdit toute intervention dans le bac ou les mécanismes d'approvisionnement puisque ceux-ci sont complètement immobilisés par la colle.

La présente invention a donc pour objet de pallier les inconvénients de l'art antérieur en proposant un procédé de remplissage d'un bac chauffant avec un produit solide qui soit simple et efficace et dont la mise en oeuvre est sans risques pour l'opérateur.

Ce but est atteint par le fait que le procédé de remplissage automatique d'un bac chauffant avec un produit solide se caractérise en ce que le procédé permet de transférer, par un chemin de transfert, le produit solide sous forme de granulés ou de poudre d'un lieu de stockage vers le bac chauffant contenant le produit chauffé et fluidisé et qu'il comprend les étapes suivantes :
- une étape de formation d'une zone chaude permanente débouchant verticalement dans le bac chauffant et de réalisation d'une zone d'isolation thermique entre le chemin de transfert reliant le lieu de stockage du produit solide à la zone chaude au-dessus du bac chauffant ;
- une étape de transfert d'une dose déterminée de produit solide sur détection d'un signal correspondant à un niveau minimum déterminé de produit dans le bac chauffant.

Selon une autre particularité, l'étape de transfert s'effectue par soufflage pendant un temps déterminé correspondant à la dose de produit ;

Selon une autre particularité, l'étape de transfert est suivie d'une étape de neutralisation du signal pendant un temps déterminé.

Selon une autre particularité, la zone d'isolation thermique est obtenue par un flux constant d'air à contre courant du flux de vapeur chaude de produit.

Un deuxième but de l'invention est de proposer un dispositif de remplissage d'un bac chauffant avec un produit solide qui soit simple et efficace et dont la manipulation est sans risques pour l'opérateur.

Ce but est atteint par le fait que le dispositif de remplissage automatique d'un bac chauffant en produit solide se caractérise en ce qu'il comprend des moyens d'approvisionnement en produit solide connecté à un moyen de distribution et des moyens de contrôle permettant de contrôler les moyens d'approvisionnement en fonction du niveau de produit dans le bac, le moyen de distribution, de forme déterminée, étant assemblé par sa partie inférieure sur le bac chauffant et comprend un ou plusieurs moyens permettant de réaliser une zone d'isolation thermique dans sa partie supérieure.

Selon une autre particularité, les moyens d'approvisionnement comprennent une cuve d'approvisionnement en forme d'entonnoir reliée à une première ouverture d'un raccord en T, un tube connecté à une source d'air comprimé est relié à une deuxième ouverture du raccord en T perpendiculaire à la première, un tuyau d'approvisionnement, relié à la troisième ouverture du raccord en T, disposé en vis-à-vis de la deuxième, établit la connexion avec le moyen de distribution.

Selon une autre particularité, le tube relié à la deuxième ouverture du raccord en T présente une extrémité en sifflet dont la disposition à l'intérieur du raccord en T est déterminée de telle sorte que le flux d'air provenant du tube soit canalisé principalement dans l'axe de la troisième ouverture en direction du tuyau d'approvisionnement et permette d'aspirer le produit de la cuve d'approvisionnement.

Selon une autre particularité, les moyens de contrôle commandent l'ouverture d'une électrovanne intercalée entre la source d'air comprimé et le raccord en T, sur réception d'un signal émis par un capteur relié aux moyens de contrôle et positionné dans le bac chauffant lors d'un niveau déterminé de produit dans le bac.

Selon une autre particularité, les moyens de contrôle comprennent un premier moyen de temporisation ou temporisateur d'expédition qui permet de maintenir l'électrovanne ouverte pendant une durée déterminée correspondant à une dose de produit transférée dans le bac chauffant.

Selon une autre particularité, les moyens de contrôle comprennent un deuxième moyen de temporisation ou temporisateur de niveau de produit dans le bac qui permet d'occulter le signal émis par le capteur pendant une durée déterminée lorsqu'une dose de produit vient d'être transférée.

Selon une autre particularité, une bonbonne, constituant une réserve d'air, est intercalée entre l'électrovanne et la source d'air comprimé afin de fournir une forte impulsion à l'ouverture de l'électrovanne pour permettre de propulser le produit présent dans le raccord en T.

Selon une autre particularité, le moyen de distribution est constitué d'un conduit de forme variable pourvu de perforations à sa périphérie dans une zone située en dessous de l'extrémité supérieure et dont l'extrémité supérieure est reliée directement ou indirectement au tuyau d'approvisionnement, l'extrémité inférieure se prolongeant radialement vers l'extérieur par un rebord circulaire pour former une embase permettant d'assembler le conduit en vis-à-vis d'une ouverture de la surface supérieure du bac chauffant, un tube se prolongeant à l'intérieur du conduit permet d'amener un flux d'air constant à proximité de l'extrémité supérieure du conduit afin de créer la zone d'isolation.

Selon une autre particularité, l'extrémité supérieure du conduit se prolonge par un raccord, coudé ou non, connecté au tuyau d'approvisionnement, le tube amenant le flux d'air étant solidaire de ce raccord.

Selon une autre particularité, la paroi interne du conduit comporte un déflecteur permettant de canaliser le produit injecté et d'optimiser l'efficacité de la zone d'isolation, et/ou la paroi externe du conduit comporte un déflecteur permettant d'optimiser l'efficacité de la zone d'isolation.

Selon une autre particularité, le moyen de distribution est constitué d'un conduit de forme variable dont l'extrémité inférieure se prolonge radialement vers l'extérieur par un rebord circulaire pour former une embase permettant d'assembler le conduit en vis-à-vis d'une ouverture de la surface supérieure du bac chauffant, et dont l'extrémité supérieure est reliée au raccord, coudé ou non, connecté au tuyau d'approvisionnement, un tube solidaire du raccord permet d'amener un flux d'air constant dans le raccord, celui-ci possédant des perforations permettant l'évacuation de l'air diffusé par le tube.

Selon une autre particularité, le tube amenant le flux d'air se prolonge dans le conduit ou uniquement dans le raccord et possède des trous permettant de diffuser l'air dans l'ensemble de la zone d'isolation.

Selon une autre particularité, le conduit est constitué d'une tôle perforée.

Selon une autre particularité, le tube est connecté à la source en air comprimé, un limiteur de débit est intercalé entre la source et le tube pour contrôler le flux d'air introduit dans le conduit.

Selon une autre particularité, l'embase est assemblée sur une platine, l'ouverture délimitée par l'extrémité inférieure du conduit étant en vis-à-vis d'une ouverture de la platine dont les dimensions sont supérieures à l'ouverture du conduit et inférieures à l'ouverture de la surface supérieure du bac chauffant sur laquelle la platine est assemblée.

Un troisième but de l'invention est de proposer une utilisation du dispositif de remplissage selon l'invention

Ce but est atteint par le fait que le dispositif selon l'invention est utilisé pour remplir un bac à colle d'une machine permettant de déposer de la colle avec de la colle sous forme de granulés.

D'autres particularités et avantages de la présente invention apparaîtront plus clairement à la lecture de la description ci-après faite en référence aux dessins annexés dans lesquels :
- la figure 1 représente une vue schématique du dispositif de remplissage selon l'invention ;
- la figure 2 représente un agrandissement de la figure 1, des moyens d'approvisionnement du dispositif de remplissage ;
- la figure 3 représente un agrandissement de la figure 1, du moyen de distribution, disposé sur le bac à colle, du dispositif de remplissage ;
- les figures 4a et 4b représentent une vue en coupe de deux variantes d'un deuxième mode de réalisation du moyen de distribution ;
- la figure 5 représente un troisième mode de réalisation du moyen de distribution ;
- les figures 6a 6b et 6c représentent une vue en coupe de trois variantes d'un quatrième mode de réalisation du moyen de distribution

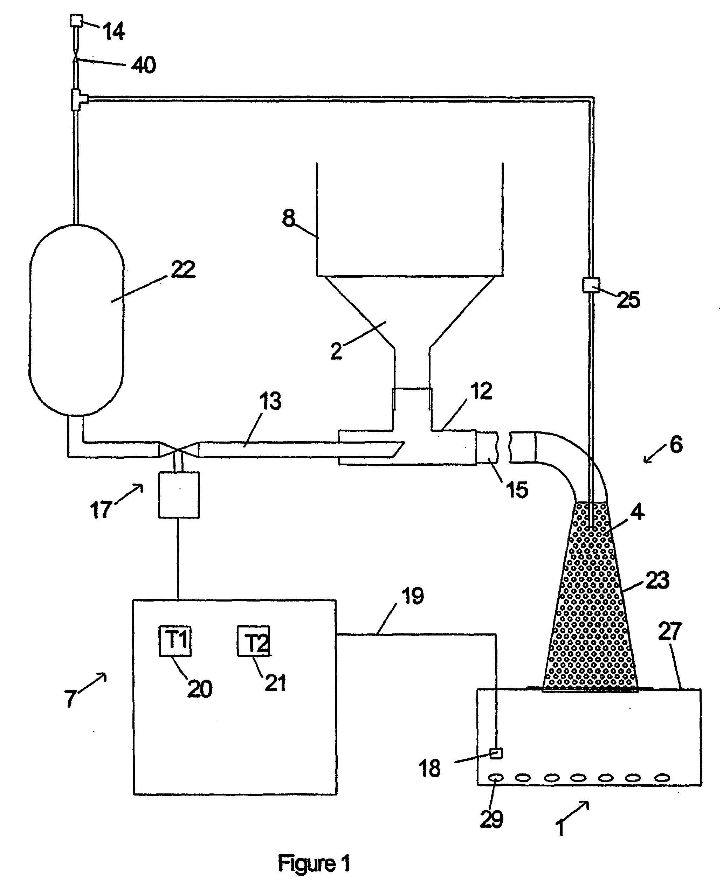

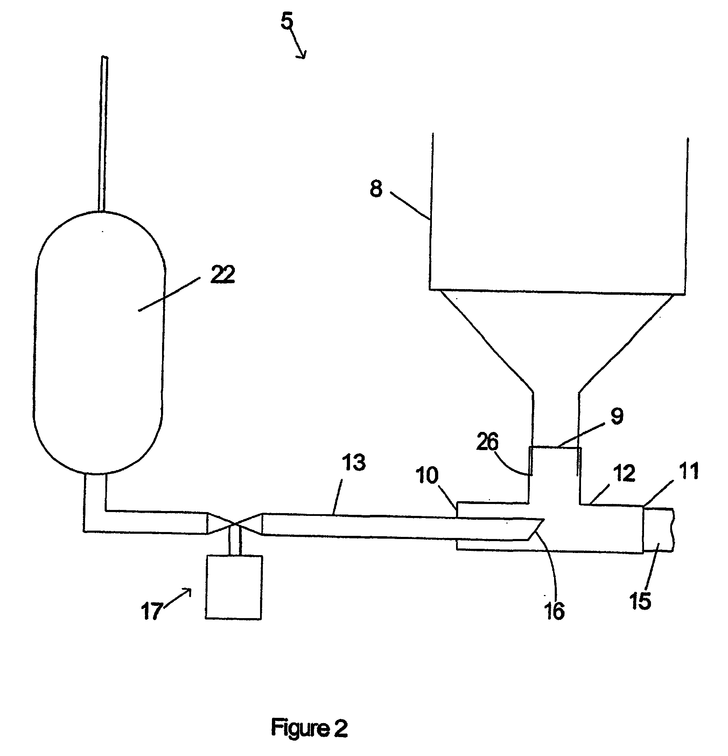

En référence aux figures 1, 2 et 3, le dispositif selon l'invention comprend un moyen de distribution (6), des moyens d'approvisionnement (5) du produit solide (2) à introduire dans le bac chauffant (1). A titre d'exemple, le produit solide est de la colle et le dispositif décrit ci-après permet de remplir un bac chauffant ou bac à colle (2) d'une machine permettant de déposer de la colle.

Les moyens d'approvisionnement (5) comprennent une cuve d'approvisionnement (8) pouvant accueillir la colle (2) sous forme solide tel que des granulés. Cette cuve (8) a la forme d'un entonnoir qui peut être chargée en colle par le haut et se vider par son extrémité inférieure (26). L'extrémité inférieure (26) de la cuve d'approvisionnement (8) est assemblée, dans une première ouverture (9) d'un raccord en T (12), perpendiculairement aux deux autres ouvertures (10, 11) du raccord en T. L'extrémité (16) en sifflet d'un tube (13), appelé ci-après tube en sifflet (13), est introduit par une deuxième ouverture (10) du raccord en T (12). Le tube en sifflet (13) est connecté à une source (14) d'air comprimé. Cette alimentation en air comprimé peut être réalisée par le réseau en air comprimé de l'entreprise qui est généralement de 6 bars. L'arrivée de l'air est commandée par une électrovanne (17). Une bonbonne (22), de 2,5 litres par exemple, peut être intercalée entre l'électrovanne (17) et la source d'air comprimé (14). Un tube d'approvisionnement (15) est connecté à la troisième ouverture (11) du raccord T (12) et au moyen de distribution (6). La position du tube en sifflet (13) dans le raccord en T est déterminée de telle sorte que le flux d'air comprimé amené par le tube en sifflet ne remonte pas verticalement en direction de la cuve d'approvisionnement (8) par la première ouverture (9) du raccord en T (12), mais soit canalisé principalement dans l'axe de la troisième ouverture (11) en direction du tuyau d'approvisionnement (15). Lorsque l'électrovanne (17) est fermée, les granulés de colle (2) descendent par gravité dans le raccord en T. La réserve d'air comprise dans la bonbonne (22) permet de donner une impulsion très importante dès l'ouverture de l'électrovanne (17). Cette forte impulsion de départ permet de déboucher le raccord en T (12) rempli de granulés de colle. Les granulés de colle sont ensuite aspirés de la cuve d'approvisionnement par le flux d'air comprimé constant et propulsés vers le tuyau d'approvisionnement (15).

Le bac à colle (1), par exemple de forme parallélépipédique, comporte quatre parois latérales, un fond et une surface supérieure (27) munie d'une ouverture (28). Le bac à colle comporte des moyens de chauffage (29), constitués, par exemple, de résistances positionnées dans la partie inférieure du bac. Selon un premier mode de réalisation, le moyen de distribution (6) comprend un conduit (23) constitué d'un tronc de cône, l'extrémité (28) dite supérieure délimite la plus petite ouverture du tronc de cône et l'autre extrémité dite inférieure (29) délimite la grande ouverture. Ce conduit (23) est appelé ci-après cône de distribution. Le cône de distribution (23) est constitué d'une tôle, inox par exemple, perforée au moins sur sa partie supérieure. Les perforations (30) sont par exemple circulaires. Le diamètre des perforations est inférieur aux dimensions des granulés de colle. L'extrémité supérieure (28) du cône de distribution (23) se prolonge par un raccord coudé, par exemple en inox, appelé coude (31). L'extrémité (32) du coude est reliée à la troisième ouverture (11) du raccord en T par le tube d'approvisionnement (15). Le diamètre du coude (31) inox peut correspondre sensiblement à celui du tuyau d'approvisionnement (15). L'extrémité inférieure (29) ou la base du cône de distribution peut se prolonger radialement vers l'extérieur par un rebord circulaire formant une embase (33). L'embase (33) du cône de distribution permet l'assemblage de celui-ci sur le bac à colle (1), en vis-à-vis de l'ouverture (28) de la surface supérieure (27) du bac à colle (1). A titre d'exemple, une platine (34), spécifique à chaque type de bac à colle (1), est positionnée sur la surface supérieure (27) du bac à colle. La platine est constituée d'une plaque parallélépipédique d'un matériau isolant à la chaleur. Cette platine (34) remplace le couvercle généralement positionné sur ce type de bac à colle (1). Deux brides (35), solidaires de la surface supérieure du bac peuvent assurer l'assemblage de la platine (34) sur le bac à colle. La platine peut comprendre une poignée positionnée sur un côté latéral afin de permettre sa manipulation sans risque. La platine (34) possède une ouverture (36), par exemple circulaire, disposée sensiblement au centre de la platine. L'embase (33) du cône (23) est positionnée sur la platine en étant centrée sur l'ouverture (36) de la platine (34). Deux brides (37), solidaires de la surface supérieure (34) de la platine, peuvent assurer l'assemblage du cône sur la platine. Ainsi un moyen de distribution peut être assemblé sur différents types de bac en utilisant une platine adaptée à chaque type de bac.

Un tube (39), solidaire du coude, est disposé dans le cône parallèlement à l'axe (AA') du cône de distribution. Ce tube est alimenté en air et permet d'amener un filet d'air permettant de créer une zone dite d'isolation dans la partie supérieure du cône. L'espace intérieur du cône peut ainsi être séparé en deux parties, une partie supérieure dite zone d'isolation (4) et une partie inférieure dite zone chaude (38) ou Hot Melt. Le tube est muni de trous de petit diamètre, en nombre suffisant pour permettre une diffusion de l'air dans l'ensemble de la zone d'isolation. Les perforations du cône permettent l'évacuation de l'air diffusé par les trous du tube. A titre d'exemple, le tube se prolonge à l'extérieur du cône et est connecté à la source (14) d'air comprimé. Le circuit d'alimentation en air comprimé du moyen de distribution et du tube en sifflet positionné dans le raccord en T peut être fermé manuellement au moyen d'une même vanne (40). Le filet d'air amené par le tube (39) dans le cône peut être réglé par un limiteur (25) de débit, intercalé entre la source (14) et le tube. Le filet d'air, pouvant s'évacuer par les perforations (30) du cône permet d'assurer dans la zone d'isolation une température proche de la température ambiante, de l'ordre de 20° C. Le filet d'air est mis en place dès la mise en route des moyens de chauffage du bac à colle et est maintenu pendant toute la durée d'utilisation du bac à colle. Il peut également être maintenu après l'utilisation du bac à colle, jusqu'à refroidissement et solidification de la colle contenue dans le bac. Il crée une isolation thermique entre la zone chaude (38) et le chemin de transfert des granulés reliant la cuve (8) au cône de distribution. La zone d'isolation thermique forme une barrière aux vapeurs de colle provenant du bac à collé. Le filet d'air empêche les granulés de colle de fondre au niveau de la zone d'isolation ou en amont, le long du chemin de transfert. Il élimine ainsi tous risques de colmatage. Les granulés, amenés dans le cône par soufflage, sont projetés en direction du bac à colle. La forme et les dimensions du cône et les perforations (30) assurent l'élimination de l'air ce qui évite tout rebondissement des granulés ou éclaboussures. La paroi extérieure du cône (23) peut comporter une collerette (3a) ou déflecteur, disposé perpendiculairement à l'axe (AA') du cône (23). Ce déflecteur permet de mieux définir la limite entre la zone d'isolation (4) et la zone chaude (38) ou 'Hot Melt' et d'améliorer l'efficacité de la zone d'isolation. Selon une variante, le déflecteur est positionné à l'intérieur du cône. Un déflecteur (3b) possède alors une forme de tronc de cône ou d'entonnoir et est alors fixé à la surface intérieure du cylindre par son extrémité délimitant l'ouverture la plus grande, la petite ouverture du déflecteur étant orientée vers l'ouverture du cylindre délimitée par son extrémité inférieure. Ce deuxième type de déflecteur permet d'une part de mieux définir la limité entre la zone d'isolation (4) et la zone chaude (38) ou 'Hot Melt' et d'améliorer l'efficacité de la zone d'isolation, et d'autre part de canaliser les granulés de colle arrivant par le coude. Le cône peut bien entendu comporter les deux types de déflecteur (3a, 3b).

Des moyens de contrôle (7) permettent de commander l'ouverture et la fermeture de l'électrovanne (17). Un capteur (18) est positionné dans le bac à colle (1) et permet de détecter un niveau déterminé de colle dans le bac. Ce capteur (17) est relié (19) aux moyens de contrôle (7), et émet un signal d'alarme vers les moyens de contrôle (7) pour un niveau de colle déterminé correspondant au niveau minimum de colle souhaité dans la cuve. Ainsi, lorsque le capteur (18) détecte un niveau minimum, les moyens de contrôle commandent l'ouverture de l'électrovanne (17) afin de transférer par soufflage les granulés du bac d'approvisionnement au bac de colle. Les moyens de contrôle (7) comprennent un premier moyen de temporisation (20), appelé temporisation d'expédition qui permet de maintenir l'électrovanne (17) ouverte pendant une durée déterminée (T1) correspondant à une dose déterminée de granulés. A titre d'exemple, l'électrovanne (17) est maintenue ouverte pendant une durée (T1) de 3 secondes, correspondant à une dose de granulés de 100 à 200 grammes.

Les moyens de contrôle (7) peuvent comprendre un deuxième moyen de temporisation (21), appelé temporisation de niveau de produit dans le bac, qui permet, lorsqu'une dose de granulés vient d'être transférée, d'occulter un éventuel signal d'alarme du capteur (18) pendant une durée déterminée (T2), afin de maintenir l'électrovanne (17) fermée. Cette temporisation, par exemple de une minute, correspond sensiblement à la durée nécessaire à la dose de granulés venant d'être transférée, pour fondre convenablement et se répartir de façon homogène dans tout le bac (1). Il permet ainsi de savoir si la dernière dose propulsée permet de dépasser le niveau minimum. L'utilisation de deux moyens de temporisation tels que décrits précédemment permet de remplir la cuve en plusieurs fois sans perturber l'utilisation du bac à colle.

Le dispositif selon l'invention permet de positionner la cuve d'approvisionnement (8) loin du bac chauffant de colle, à une distance proportionnelle à la longueur du tube d'approvisionnement. L'opérateur peut ainsi charger la cuve de granulés sans risques. Cette étape de chargement constitue l'unique intervention de l'opérateur pour permettre le remplissage du bac chauffant.

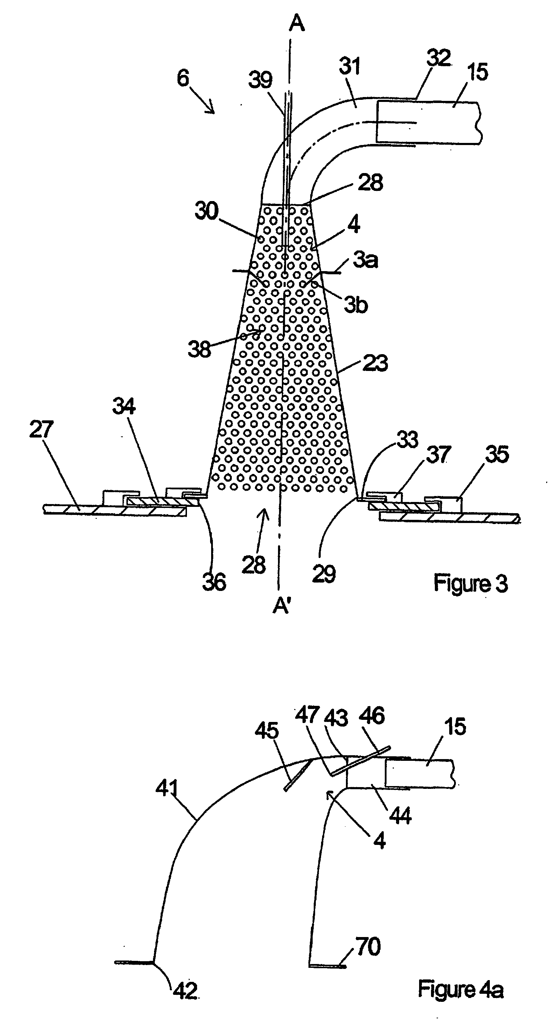

Selon un deuxième mode de réalisation d'un moyen de distribution et en référence à la figure 4a, le cône est remplacé par un conduit (41), dit arrondi, dont l'extrémité inférieure (42) de section rectangulaire ou carrée est perpendiculaire à l'extrémité supérieure (43) de section carrée. Les dimensions de l'extrémité inférieure (42) sont supérieures à celles de l'extrémité supérieure (43). Le conduit arrondi (41) est constitué d'une tôle perforée ou grillage. L'extrémité inférieure (42) se prolonge par un rebord formant une embase (70). Cette embase permet d'assembler le conduit arrondi (41) sur la surface supérieure d'un bac à colle. L'extrémité supérieure (43) se prolonge par un raccord constitué d'un tube à section carrée, appelé tube carré (44) au bout duquel est fixé le tuyau d'approvisionnement (15).

La surface intérieure du conduit arrondi présente un déflecteur (45) disposé de telle sorte qu'il puisse orienter les granulés de colle amenés par le tuyau d'approvisionnement (15) vers l'extrémité inférieure (42) du conduit arrondi (41). Un petit tube (46), solidaire du tube carré (44), permet de créer la zone d'isolation (4). Le tube d'arrivée d'air est disposé incliné à l'intérieur du tube carré, son extrémité (47) étant positionnée entre le déflecteur et l'extrémité supérieure (43) du tube arrondi. Le tube comporte de multiples trous permettant de diffuser l'air dans l'ensemble de la zone d'isolation. Le tube se prolonge en dehors du tube carré et est connecté à la source d'air comprimé. La forme et les dimensions du conduit arrondi sont définies pour permettre une élimination de l'air et un écoulement efficaces des granulés.

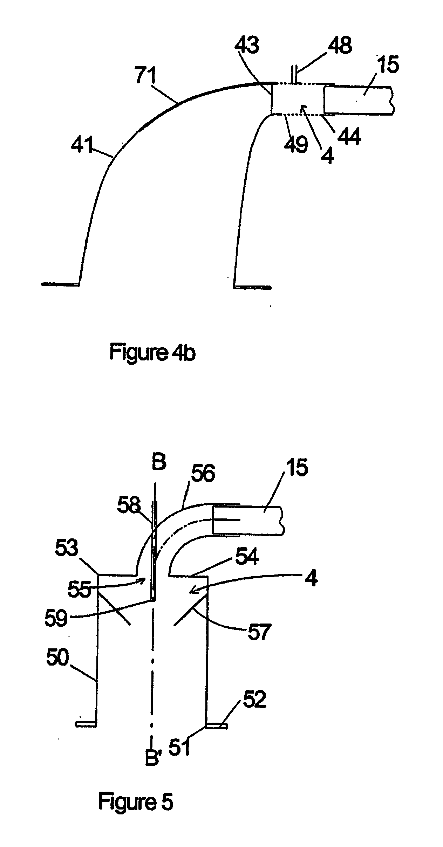

Selon une variante du deuxième mode de réalisation et en référence à la figure 4b, le tube arrondi (41) ne comporte pas de déflecteur mais possède une partie (71) non perforée disposée en vis-à-vis du tuyau d'approvisionnement (15). Cette partie (71) non perforée se prolonge jusqu'à l'extrémité supérieure (43) du tube arrondi. Un petit tube (48) relié à une arrivée d'air, solidaire du tube carré, permet d'amener un filet d'air dans le tube carré (44) mais ne pénètre pas dans celui-ci. Le tube carré possède de multiples trous (49) permettant l'évacuation de l'air amené par le petit tube. L'espace intérieur du tube carré constitue alors la zone d'isolation (4).

Selon un troisième mode de réalisation et en référence à la figure 5, le moyen de distribution est constitué d'un cylindre (50) formé d'une tôle perforée ou grillage. L'extrémité inférieure (51) du cylindre se prolonge vers l'extérieur par un rebord formant une embase (52). L'extrémité supérieure (53) du cylindre est fermée par une paroi supérieure (54). La paroi supérieure (54) comporte une ouverture circulaire (55) centrée selon l'axe (BB') du cylindre. Un raccord coudé ou coude (56), en inox par exemple, est fixé par une de ses extrémités sur la paroi supérieure (54) du cylindre, l'ouverture du coude délimité par cette extrémité étant positionnée en vis-à-vis de l'ouverture (55) de la paroi supérieure (54). Le diamètre intérieur du coude est sensiblement égal à celui de l'ouverture de la paroi supérieure. Le coude est connecté par son autre extrémité au tuyau d'approvisionnement (15). Un déflecteur (57) en forme de tronc de cône ou d'entonnoir est fixé à la surface intérieure du cylindre par son extrémité délimitant l'ouverture la plus grande, la petite ouverture du déflecteur étant orientée vers l'ouverture du cylindre délimitée par son extrémité inférieure. La zone d'isolement (4) positionnée au-dessus du déflecteur est formée par un petit tube (58) relié à une source d'air. Le petit tube peut comporter de multiples trous permettant la diffusion de l'air. L'extrémité du tube (59) est positionnée dans le cylindre au-dessus de la petite ouverture du déflecteur (57). Le petit tube (58) peut être solidaire du coude (56) et être disposé parallèlement à l'axe (BB') du cylindre.

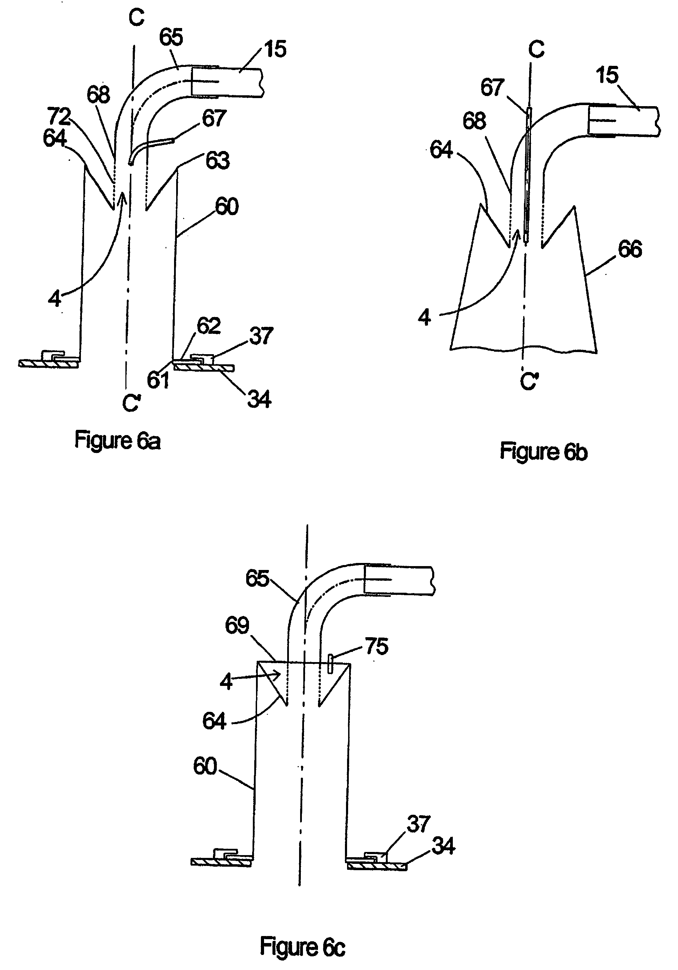

Selon un quatrième mode de réalisation et en référence à la figure 6a, le moyen de distribution est constitué d'un cylindre formé (60) d'une tôle perforée ou d'un grillage. L'extrémité inférieure (61) du cylindre se prolonge vers l'extérieur par un rebord formant une embase (62). Le cylindre comprend une paroi supérieure (64) en forme d'entonnoir, fixée à l'extrémité supérieure (63) du cylindre par son extrémité définissant l'ouverture la plus grande, la petite ouverture étant orientée vers l'ouverture du cylindre délimitée par son extrémité inférieure (61). Un raccord coudé ou coude cylindrique (65) est fixé par une de ses extrémités à l'extrémité de la paroi supérieure définissant la petite ouverture. L'autre extrémité du coude (65) est connectée au tuyau d'approvisionnement (15). Selon une variante et suivant la figure 6b, le cylindre est remplacé par un conduit (66) constitué d'un tronc de cône, l'extrémité du conduit délimitant l'ouverture la plus petite correspondant alors à l'extrémité supérieure du cylindre. Un petit tuyau (67), solidaire du coude (65), est disposé dans le coude parallèlement à l'axe (CC') du conduit (66), tel que représenté à la figure 6b, ou sensiblement perpendiculaire à l'axe (CC') du conduit (60), tel que représenté à la figure 6a. Dans ce dernier cas, l'extrémité du tube peut être courbée parallèlement à l'axe (CC') du conduit, de telle sorte que le flux d'air soit orienté en direction de l'ouverture du conduit (60) délimitée par son extrémité inférieure (61). L'extrémité du petit tube (67, 68) est disposée au-dessus de la petite ouverture de la paroi supérieure (64). Le petit tube peut comporter de multiples trous permettant la diffusion de l'air. La paroi du coude comporte, en périphérie du petit tube, de multiples perforations (72) permettant l'évacuation de l'air diffusé par le petit tube. Une zone d'isolation (4) est ainsi formée au-dessus de la petite ouverture de la paroi supérieure (64) du conduit. Selon une variante et en référence à la figure 6c, le moyen de distribution, tel que représenté à la figure 6a ou 6b, comporte une paroi (69) supplémentaire perpendiculairement à l'axe du cylindre et fermant l'extrémité supérieure du cylindre, le petit tube (75) d'arrivée d'air étant cette fois-ci solidaire de cette paroi supplémentaire. Les perforations du coude sont comprises entre la paroi supplémentaire et la petite ouverture du déflecteur. La zone d'isolation est alors constituée par l'espace compris entre la paroi supplémentaire et la paroi en forme d'entonnoir (64).

Les différents moyens de distribution, décrits dans le deuxième, troisième et quatrième modes de réalisation, peuvent être assemblés au bac à colle par leur embase de manière similaire à celle décrite pour le premier mode de réalisation, en utilisant une platine.

Le dispositif selon l'invention peut être utilisé pour remplir un bac chauffant avec tous types de produits solides sous forme de granulés ou poudre afin de liquéfier le produit par chauffage, avec l'addition d'un solvant ou non.

## Revendications

1. Procédé de remplissage automatique d'un bac chauffant (1 ) avec un produit solide (2) **caractérisé en ce que** le procédé permet de transférer, par un chemin de transfert, le produit solide (2) sous forme de granulé ou de poudre d'un lieu de stockage (8) vers le bac chauffant (1) contenant le produit chauffé et fluidisé et qu'il comprend les étapes suivantes:
- une étape de formation d'une zone chaude (38) permanente débouchant verticalement dans le bac chauffant (1) et de réalisation d'une zone d'isolation thermique (4) entre le chemin de transfert reliant le lieu de stockage (8) du produit solide à la zone chaude (38) au-dessus du bac chauffant;
- une étape de transfert d'une dose déterminée de produit solide (2) sur détection d'un signal correspondant à un niveau minimum déterminé de produit dans le bac chauffant (1).

2. Procédé de remplissage automatique selon la revendication 1, **caractérisé en ce que** l'étape de transfert s'effectue par soufflage pendant un temps déterminé (T1) correspondant à la dose de produit (2);

3. Procédé de remplissage automatique selon la revendication 1 ou 2, **caractérisé en ce que** l'étape de transfert est suivie d'une étape de neutralisation du signal pendant un temps déterminé (T2).

4. Procédé de remplissage automatique selon la revendication 1 ou 2, **caractérisé en ce que** la zone d'isolation thermique (4) est obtenue par un flux constant d'air à contre courant du flux de vapeur chaude de produit.

5. Dispositif de remplissage automatique d'un bac chauffant (1) en produit solide (2) **caractérisé en ce qu'**il comprend des moyens d'approvisionnement (5) en produit solide connecté à un moyen de distribution (6) et des moyens de contrôle (7) permettant de contrôler les moyens d'approvisionnement (5) en fonction du niveau de produit dans le bac (1), le moyen de distribution (6), de forme déterminée, étant assemblé par sa partie inférieure sur le bac chauffant et comprend un ou plusieurs moyens permettant de réaliser une zone d'isolation thermique (4) dans sa partie supérieure.

6. Dispositif de remplissage automatique selon la revendication 5, **caractérisé en ce que** les moyens d'approvisionnement (5) comprennent une cuve d'approvisionnement (8) en forme d'entonnoir reliée à une première ouverture (9) d'un raccord en T (12), un tube (13) connecté à une source (14) d'air comprimé est relié à une deuxième ouverture (10) du raccord en T (12) perpendiculaire à la première (9), un tuyau d'approvisionnement (15) relié à la troisième ouverture (11) du raccord en T, disposé en vis-à-vis de la deuxième (10) établit la connexion avec le moyen de distribution (6).

7. Dispositif de remplissage automatique selon la revendication 6, **caractérisé en ce que** le tube (13) relié à la deuxième ouverture du raccord en T présente une extrémité (16) en sifflet dont la disposition à l'intérieur du raccord en T est déterminée de telle sorte que le flux d'air (17) provenant du tube (13) soit canalisé principalement dans l'axe de la troisième ouverture (11) en direction du tuyau d'approvisionnement (15) et permette d'aspirer le produit de la cuve d'approvisionnement (8).

8. Dispositif de remplissage automatique selon la revendication 7, **caractérisé en ce que** les moyens de contrôle (7) commandent l'ouverture d'une électrovanne (17) intercalée entre la source d'air (14) comprimé et le raccord en T, sur réception d'un signal émis par un capteur (18) relié (19) aux moyens de contrôle (7) et positionné dans le bac chauffant (1) lors d'un niveau déterminé de produit dans le bac.

9. Dispositif de remplissage automatique selon la revendication 8, **caractérisé en ce que** les moyens de contrôle (7) comprennent un premier moyen de temporisation ou temporisateur d'expédition (20) qui permet de maintenir l'électrovanne (17) ouverte pendant une durée déterminée (T1) correspondant à une dose de produit transféré dans le bac chauffant (1).

10. Dispositif de remplissage automatique selon la revendication 9, **caractérisé en ce que** les moyens de contrôle comprennent un deuxième moyen de temporisation (21) ou temporisateur de niveau de produit dans le bac qui permet d'occulter le signal émis par le capteur (18) pendant une durée déterminée (T2) lorsqu'une dose de produit vient d'être transférée.

11. Dispositif de remplissage automatique selon l'une des revendications 8 à 10, **caractérisé en ce qu'**une bonbonne (22), constituant une réserve d'air, est intercalée entre l'électrovanne (17) et la source (14) d'air comprimé afin de foumir une forte impulsion à l'ouverture de l'électrovanne pour permettre de propulser le produit présent dans le raccord en T.

12. Dispositif de remplissage automatique selon l'une des revendications 5 à 11, **caractérisé en ce que** le moyen de distribution (5) est constitué d'un conduit (23, 50, 41) de forme variable pourvue de perforations (30) à sa périphérie dans une zone située en dessous de l'extrémité supérieure (28, 53, 43) et dont l'extrémité supérieure est reliée directement ou indirectement au tuyau d'approvisionnement (15), l'extrémité inférieure (29, 51, 42) se prolongeant radialement vers l'extérieur par un rebord circulaire pour former une embase (33, 52, 70)) permettant d'assembler le conduit en vis-à-vis d'une ouverture de la surface supérieure (27) du bac chauffant, un tube (39, 58, 46) se prolongeant à l'intérieur du conduit (23, 50, 41) permet d'amener un flux d'air constant à proximité de l'extrémité supérieure du conduit afin de créer la zone d'isolation (4).

13. Dispositif de remplissage automatique selon la revendication 12 **caractérisé en ce que** l'extrémité supérieure du conduit se prolonge par un raccord (31, 56, 44), coudé ou non, connecté au tuyau d'approvisionnement (15), le tube amenant le flux d'air étant solidaire de ce raccord.

14. Dispositif de remplissage automatique selon la revendication 12 ou 13 **caractérisé en ce que** la paroi interne du conduit (23, 50, 41) comporte un déflecteur (3a, 57, 45) permettant de canaliser le produit injecté et d'optimiser l'efficacité de la zone d'isolation (4), et/ou la paroi externe du conduit comporte un déflecteur (3b) permettant d'optimiser l'efficacité de la zone d'isolation (4).

15. Dispositif de remplissage automatique selon l'une des revendications 5 à 11, **caractérisé en ce que** le moyen de distribution est constitué d'un conduit (41, 60, 66)) de forme variable dont l'extrémité inférieure (42, 61) se prolonge radialement vers l'extérieur par un rebord circulaire pour former une embase (70, 62)) permettant d'assembler le conduit en vis-à-vis d'une ouverture de la surface supérieure du bac chauffant, et dont l'extrémité supérieure (43, 63) est reliée à un raccord (44, 65) coudé ou non, connecté au tuyau d'approvisionnement (15), un tube (48, 67, 75) solidaire du raccord permet d'amener un flux d'air constant dans le raccord, celui-ci possédant des perforations (49, 72) permettant l'évacuation de l'air diffusé par le tube.

16. Dispositif de remplissage automatique selon l'une des revendications 12 à 15, **caractérisé en ce que** le tube amenant le flux d'air se prolonge dans le conduit ou uniquement dans le raccord et possède des trous permettant de diffuser l'air dans l'ensemble de la zone d'isolation.

17. Dispositif de remplissage automatique selon l'une des revendications 12 à 16 **caractérisé en ce que** le conduit est constitué d'une tôle perforée.

18. Dispositif de remplissage automatique selon l'une des revendications 12 à 17, **caractérisé en ce que** le tube est connecté à la source (14) en air comprimé, un limiteur (25) de débit est intercalé entre la source et le tube pour contrôler le flux d'air introduit dans le conduit.

19. Dispositif de remplissage automatique selon l'une des revendications 12 à 18, **caractérisé en ce que** l'embase (33, 70, 62, 52) est assemblée sur une platine (34), l'ouverture (28) délimitée par l'extrémité inférieure du conduit étant en vis-à-vis d'une ouverture (36) de la platine dont les dimensions sont supérieures à l'ouverture (28) du conduit et inférieures à l'ouverture de la surface supérieure (27) du bac chauffant (1) sur laquelle la platine est assemblée.

20. Utilisation du dispositif selon l'une des revendications 5 à 19 pour remplir un bac de colle sous forme de granulés.

## Patentansprüche

1. Verfahren zum automatischen Füllen eines Heizbehälters (1) mit einem festen Produkt (2), **dadurch gekennzeichnet, daß** das Verfahren ermöglicht, über einen Transportweg das feste Produkt (2) in Form eines Granulats oder Pulvers von einem Lagerort (8) zu dem Heizbehälter (1) zu transportieren, der das erwärmte und fluidisierte Produkt enthält, und daß es folgende Schritte umfaßt:
- einen Schritt der Bildung einer permanent warmen Zone (38), die vertikal in den Heizbehälter (1) mündet, und der Herstellung einer Wärmedämmzone (4) zwischen dem Transportweg, der den Lagerort (8) des festen Produkts mit der warmen Zone (38) über dem Heizbehälter (1) verbindet;
- einen Schritt des Transports einer bestimmten Dosis des festen Produkts (2) bei Erfassung eines Signals, das einem bestimmten Minimalniveau des Produkts in dem Heizbehälter (1) entspricht.

2. Automatisches Füllverfahren nach Anspruch 1, **dadurch gekennzeichnet, daß** der Transportschritt durch Blasen während einer bestimmten Zeit (T1) durchgeführt wird, die der Produktdosis (2) entspricht.

3. Automatisches Füllverfahren nach Anspruch 1 oder 2, **dadurch gekennzeichnet, daß** auf den Transportschritt ein Schritt der Neutralisation des Signals während einer bestimmten Zeit (T2) folgt.

4. Automatisches Füllverfahren nach Anspruch 1 oder 2, **dadurch gekennzeichnet, daß** die Wärmedämmzone (4) durch einen konstanten Luftstrom im Gegenstrom gegen den warmen Produktdampfstrom erhalten ist.

5. Vorrichtung zum automatischen Füllen eines Heizbehälters (1) mit einem festen Produkt (2), **dadurch gekennzeichnet, daß** sie Mittel (5) zur Versorgung mit dem festen Produkt, die mit einem Verteilungsmittel (6) verbunden sind, und Kontrollmittel (7) aufweist, mit denen die Versorgungsmittel (5) in Abhängigkeit von dem Niveau des Produkts in dem Behälter (1) kontrolliert werden können, wobei das Verteilungsmittel (6) mit bestimmter Form mit seinem unteren Teil in den Behälter (1) eingesetzt ist und ein oder mehrere Mittel aufweist, mit denen in seinem oberen Teil eine Wärmedämmzone (4) hergestellt werden kann.

6. Automatische Füllvorrichtung nach Anspruch 5, **dadurch gekennzeichnet, daß** die Versorgungsmittel (5) eine trichterförmige Versörgungswanne (8), die mit einer ersten Öffnung (9) eines T-Stücks (12) verbunden ist, wobei ein Rohr (13), das an eine Druckluftquelle (14) angeschlossen ist, mit einer zweiten Öffnung (10) des T-Stücks (12) verbunden ist, die zu der ersten (9) senkrecht liegt, wobei eine Versorgungsleitung (15), die mit der dritten Öffnung (11) des T-Stücks verbunden ist, die gegenüber der zweiten Öffnung (10) angeordnet ist, den Anschluß an das Verteilungsmittel (6) herstellt.

7. Automatische Füllvorrichtung nach Anspruch 6, **dadurch gekennzeichnet, daß** das Rohr (13), das mit der zweiten Öffnung des T-Stücks verbunden ist, ein pfeifenförmiges Ende (16) aufweist, dessen Anordnung im Inneren des T-Stücks derart bestimmt ist, daß der aus dem Rohr (13) stammende Luftstrom (17) hauptsächlich in der Achse der dritten Öffnung (11) in Richtung der Versorgungsleitung (15) kanalisiert ist und ermöglicht, daß das Produkt aus der Versörgungswanne (8) angesaugt werden kann.

8. Automatische Füllvorrichtung nach Anspruch 7, **dadurch gekennzeichnet, daß** die Kontrollmittel (7) das Öffnen eines Elektroventils (17), das zwischen die Druckluftquelle (14) und das T-Stück geschaltet ist, auf den Empfang eines Signals hin steuern, das von einem Sensor (18), der mit den Kontrollmitteln (7) verbunden ist (19) und in dem Heizbehälter (1) positioniert ist, ausgesendet wird bei einem bestimmten Niveau des Produkts in dem Behälter.

9. Automatische Füllvorrichtung nach Anspruch 8, **dadurch gekennzeichnet, daß** die Kontrollmittel (7) ein erstes Verzögerungsmittel oder einen Beförderungsverzögerer (20) aufweisen, mit dem das Elektroventil (17) während einer bestimmten Zeit (T1) geöffnet gehalten werden kann, die einer Dosis des in den Heizbehälter (1) transportierten Produkts entspricht.

10. Automatische Füllvorrichtung nach Anspruch 9, **dadurch gekennzeichnet, daß** die Kontrollmittel ein zweites Verzögerungsmittel (21) oder einen Verzögerer für das Niveau des Produkts in dem Behälter aufweisen, mit dem das von dem Sensor (18) ausgesendete Signal während einer bestimmten Zeit (T2) verdeckt werden kann, wenn gerade eine Produktdosis transportiert wurde.

11. Automatische Füllvorrichtung nach einem der Ansprüche 8 bis 10, **dadurch gekennzeichnet, daß** ein Ballon (22), der eine Luftreserve bildet, zwischen das Elektroventil (17) und die Druckluftquelle (14) geschaltet ist, um beim Öffnen des Elektroventils einen starken Impuls zu liefern, damit das in dem T-Stück anwesende Produkt angetrieben werden kann.

12. Automatische Füllvorrichtung nach einem der Ansprüche 5 bis 11, **dadurch gekennzeichnet, daß** das Verteilungsmittel (5) aus einem Kanal (23, 50, 41) mit variabler Form besteht, der an seinem Umfang in einer unter dem oberen Ende (28, 53, 43) gelegenen Zone mit Perforationen versehen ist und dessen oberes Ende direkt oder indirekt mit der Versorgungsleitung (15) verbunden ist, wobei das untere Ende (29, 51, 42) durch einen kreisförmigen Rand radial nach außen verlängert ist, um eine Befestigungsfläche (33, 52, 70) zu bilden, durch die der Kanal gegenüber einer Öffnung der oberen Fläche (27) des Heizbehälters eingesetzt werden kann, und einem Rohr (39, 58, 46), das ins Innere des Kanals (23, 50, 41) verlängert ist und mit dem ein konstanter Luftstrom in der Nähe des oberen Endes des Kanals zugeführt werden kann, um die Dämmzone (4) zu erzeugen.

13. Automatische Füllvorrichtung nach Anspruch 12, **dadurch gekennzeichnet, daß** das obere Ende des Kanals durch ein knieförmiges oder nicht knieförmiges Stück (31, 56, 44) verlängert ist, das mit der Versorgungsleitung (15) verbunden ist, wobei das den Luftstrom zuführende Rohr mit diesem Stück fest verbunden ist.

14. Automatische Füllvorrichtung nach Anspruch 12 oder 13, **dadurch gekennzeichnet, daß** die Innenwand des Kanals (23, 50, 41) einen Ablenker (3a, 57, 45) aufweist, durch den das eingespritzte Produkt kanalisiert und die Wirksamkeit der Dämmzone (4) optimiert werden kann, und/oder die Außenwand des Kanals einen Ablenker (3b) aufweist, durch den die Wirksamkeit der Dämmzone (4) optimiert werden kann.

15. Automatische Füllvorrichtung nach einem der Ansprüche 5 bis 11, **dadurch gekennzeichnet, daß** das Verteilungsmittel aus einem Kanal (41, 60, 66) mit variabler Form besteht, dessen unteres Ende (42, 61) durch einen kreisförmigen Rand radial nach außen verlängert ist, um eine Befestigungsfläche (70, 62) zu bilden, durch die der Kanal gegenüber einer Öffnung der oberen Fläche des Heizbehälters eingesetzt werden kann, und dessen oberes Ende (43, 63) mit einem knieförmigen oder nicht knieförmigen Stück (44, 65) verbunden ist, das mit der Versorgungsleitung (15) verbunden ist, wobei ein mit dem Stück fest verbundenes Rohr (48, 67, 75) ermöglicht, daß ein konstanter Luftström in das Stück zugeführt wird, das Perforationen (49, 72) besitzt, durch die die von dem Rohr diffundierte Luft evakuiert werden kann.

16. Automatische Füllvorrichtung nach einem der Ansprüche 12 bis 15, **dadurch gekennzeichnet, daß** das den Luftstrom zuführende Rohr in den Kanal oder lediglich in das Stück verlängert ist und Löcher besitzt, mit denen die Luft in der gesamten Dämmungszone diffundiert werden kann.

17. Automatische Füllvorrichtung nach einem der Ansprüche 12 bis 16, **dadurch gekennzeichnet, daß** der Kanal aus einem perforierten Blech besteht.

18. Automatische Füllvorrichtung nach einem der Ansprüche 12 bis 17, **dadurch gekennzeichnet, daß** das Rohr an eine Druckluftquelle (14) angeschlossen ist und ein Durchsatzbegrenzer (25) zwischen die Quelle und das Rohr geschaltet ist, um den in den Kanal eingebrachten Luftstrom zu kontrollieren.

19. Automatische Füllvorrichtung nach einem der Ansprüche 12 bis 18, **dadurch gekennzeichnet, daß** die Befestigungsfläche (33, 70, 62, 52) auf einer Halteplatte (34) montiert ist, wobei die von dem unteren Ende des Kanals begrenzte Öffnung (28) gegenüber einer Öffnung (36) der Halteplatte liegt, deren Abmessungen größer als die Öffnung (28) des Kanals und kleiner als die Öffnung der obere Fläche (27) des Heizbehälters (1) sind, auf der die Halteplatte montiert ist.

20. Verwendung einer Vorrichtung nach einem der Ansprüche 5 bis 19 zum Füllen eines Behälters mit Klebstoff in Form von Granulat.

## Claims

1. Method for automatic filling of a heating tank (1) with a solid product (2) **characterised in that** the method makes it possible to transfer the solid product (2) in granule or powder form, via a transfer path, from a storage place (8) to the heating tank (1) containing the heated and fluidised product and **in that** it comprises the following steps:
- a step of forming a permanent hot zone (38) opening out vertically into the heating tank (1) and of producing a thermal insulation zone (4) between the transfer path connecting the storage place (8) for the solid product to the hot zone (38) above the heating tank;
- a step of transferring a predetermined measured amount of solid product (2) on detection of a signal corresponding to a predetermined minimum level of product in the heating tank (1).

2. Automatic filling method according to Claim 1, **characterised in that** the transfer step takes place by blowing for a given time (T1) corresponding to the measured amount of product (2).

3. Automatic filling method according to Claim 1 or 2, **characterised in that** the transfer step is followed by a step of neutralising the signal for a given time (T2).

4. Automatic filling method according to Claim 1 or 2, **characterised in that** the thermal insulation zone (4) is produced by a constant air flow in the opposite direction to the flow of hot product vapour.

5. Device for automatic filling of a heating tank (1) with solid product (2) **characterised in that** it comprises means (5) for supplying solid product connected to a distribution means (6) and monitoring means (7) allowing the supply means (5) to be monitored as a function of the level of product in the tank (1), the distribution means (6), of a predetermined form, being assembled by its lower portion over the heating tank and comprises one or more means allowing a thermal insulation zone (4) to be produced in its upper portion.

6. Automatic filling device according to Claim 5, **characterised in that** the supply means (5) comprise a supply vat (8) in the form of a funnel connected to a first opening (9) of a T-connector (12), a tube (13) connected to a source (14) of compressed air is connected to a second opening (10) of the T-connector (12) perpendicular to the first one (9), a supply pipe (15) connected to the third opening (11) of the T-connector, arranged opposite the second one (10) establishes the connection with the distribution means (6).

7. Automatic filling device according to Claim 6, **characterised in that** the tube (13) connected to the second opening of the T-connector has a whistle-type end (16), the arrangement of which inside the T-connector is determined in such a way that the air flow (17) coming from the tube (13) is channelled mainly in the axis of the third opening (11) towards the supply pipe (15) and allows the product to be sucked from the supply vat (8).

8. Automatic filling device according to Claim 7, **characterised in that** the monitoring means (7) control the opening of a solenoid valve (17) interposed between the compressed air source (14) and the T-connector, on receipt of a signal sent by a sensor (18) connected (19) to the monitoring means (7) and positioned in the heating tank (1) when there is a given level of product in the tank.

9. Automatic filling device according to Claim 8, **characterised in that** the monitoring means (7) comprise a first time-delay means or despatch timer (20), which allows the solenoid valve (17) to be kept open for a given period (T1) corresponding to a measured amount of product transferred into the heating tank (1).

10. Automatic filling device according to Claim 9, **characterised in that** the monitoring means comprise a second time-delay means (21) or timer for product level in the tank, which allows the signal sent by the sensor (18) to be hidden for a given period (T2) when a measured amount of product has just been transferred.

11. Automatic filling device according to one of Claims 8 to 10, **characterised in that** a cylinder (22), constituting an air reserve, is interposed between the solenoid valve (17) and the compressed air source (14) so as to provide a strong impulse on opening the solenoid valve in order to allow the product present in the T-connector to be propelled.

12. Automatic filling device according to one of Claims 5 to 11, **characterised in that** the distribution means (5) is constituted by a conduit (23, 50, 41) of variable form provided with perforations (30) on its periphery in a zone located below the upper end (28, 53, 43) and the upper end of which is connected directly or indirectly to the supply pipe (15), the lower end (29, 51, 42) extending radially outwards via a circular flange in order to form a base (33, 52, 70) allowing the conduit to be fitted facing an opening on the upper surface (27) of the heating tank, a tube (39, 58, 46) extending inside the conduit (23, 50, 41) allows a constant air flow to be conveyed near the upper end of the conduit so as to create the insulation zone (4).

13. Automatic filling device according to Claim 12 **characterised in that** the upper end of the conduit extends via a connector (31, 56, 44), elbowed or not, connected to the supply pipe (15), the tube conveying the air flow being integral with this connector.

14. Automatic filling device according to Claim 12 or 13 **characterised in that** the inner wall of the conduit (23, 50, 41) comprises a deflector (3a, 57, 45) allowing the injected product to be channelled and the efficiency of the insulation zone (4) to be optimised, and/or the outer wall of the conduit comprises a deflector (3b) allowing the efficiency of the insulation zone (4) to be optimised.

15. Automatic filling device according to one of Claims 5 to 11, **characterised in that** the distribution means is constituted by a conduit (41, 60, 6) of variable form, the lower end (42, 61) of which extends radially outwards via a circular flange in order to form a base (70, 62) allowing the conduit to be fitted facing an opening on the upper surface of the heating tank, and the upper end (43, 63) of which is connected to a connector (44, 65), elbowed or not, connected to the supply pipe (15), a tube (48, 67, 75) integral with the connector allows a constant air flow to be conveyed within the connector, the latter having perforations (49, 72) allowing the air diffused by the tube to be exhausted.

16. Automatic filling device according to one of Claims 12 to 15, **characterised in that** the tube conveying the air flow extends into the conduit or solely in the connector and has holes allowing the air to be diffused into the whole insulation zone.

17. Automatic filling device according to one of Claims 12 to 16 **characterised in that** the conduit is constituted by a perforated metal sheet.

18. Automatic filling device according to one of Claims 12 to 17, **characterised in that** the tube is connected to the source (14) of compressed air, a flow limiter (25) is interposed between the source and the tube in order to monitor the air flow introduced into the conduit.

19. Automatic filling device according to one of Claims 12 to 18, **characterised in that** the base (33, 70, 62, 52) is fitted to a plate (34), the opening (28) delimited by the lower end of the conduit facing an opening (36) in the plate, the dimensions of which are greater than the opening (28) of the conduit and less than the opening in the upper surface (27) of the heating tank (1) to which the plate is fitted.

20. Use of the device according to one of Claims 5 to 19 for filling a tank of glue in granule form.
